# EUROPEAN PATENT APPLICATION

(11) **EP 4 811 471 A1**
(43) Date of publication of application: **23.09.2026**
(21) Application number: 25164885.3
(22) Date of filing: 19.03.2025
(51) Int. Cl.: H01M 8/04007, H01M 8/04029, H01M 8/04223

(54) **THERMAL MANAGEMENT SYSTEM FOR A FUEL CELL VEHICLE**

(71) Applicant: Volvo Penta Corporation, 405 08 Göteborg (SE)
(72) Inventor: BACKEGÅRDH, Erik, 443 73 Gråbo (SE)
(74) Representative: Valea AB

(57) **Abstract**

A thermal management system for a fuel cell vehicle is provided that comprises a fuel cell system and a cooling system. The thermal management system comprises a first coolant heating circuit comprising a coolant heater configured to preheat the portion of the coolant before starting up the fuel cell system and coupled to a main cooling circuit and configured to have a portion of the coolant being selectively passed therethrough; a second coolant heating circuit comprising a cabin heater and coupled to the main cooling circuit and configured to have a portion of the coolant in the pump downstream portion being selectively passed therethrough; and a third coolant heating circuit comprising a cryogenic hydrogen storage heater configured to regulate a temperature of a cryogenic hydrogen storage of the fuel cell vehicle and coupled to the main cooling circuit and configured to have a portion of the coolant in the pump downstream portion being selectively passed therethrough.

## Description

### TECHNICAL FIELD

This disclosure relates generally to a thermal management system for a fuel cell vehicle and operating the thermal management system. The disclosure can be applied to heavy-duty vehicles, such as trucks, buses, and construction equipment, among other vehicle types and machines. Although the disclosure may be described with respect to a particular vehicle, the disclosure is not restricted to any particular vehicle or machine.

### BACKGROUND

A fuel cell vehicle or a stationary system comprising a fuel cell system comprises various components for controlling a temperature of the fuel cell system and other systems and devices of the vehicle or the stationary system. A temperature of the fuel cell system may be controlled by a thermal management system having a coolant circulating therein, and other thermal management devices and systems in the vehicle may be used for controlling a temperature of other components of the vehicle. Thus, there are typically multiple components and lines through which a coolant is passed. For example, several pumps and many bypasses may be used for cooling, which increases turbulence of the coolant flow, thereby decreasing cooling efficiency and increasing costs and assembly complexity. Also, operation and management of one or more thermal management devices and/or systems may become complicated.

Thus, there is a need for improved control of a temperature of various components of the fuel cell vehicle or a stationary system comprising a fuel cell system.

### SUMMARY

In accordance with examples of the present disclosure, a thermal management system for a fuel cell vehicle is provided that has a simplified configuration that allows to control a temperature of related components with improved efficiency and reduced complexity.

In an aspect, a thermal management system for a fuel cell vehicle is provided. The thermal management system comprises a fuel cell system and a cooling system comprising a main cooling circuit configured to have a coolant circulating therein to regulate a temperature of the fuel cell system, wherein the main cooling circuit comprises a coolant pump configured to pump the coolant through the main cooling circuit, the main cooling circuit comprising a pump downstream portion located downstream of the pump and a pump upstream portion located upstream of the pump. The thermal management system also comprises a first coolant heating circuit coupled to the main cooling circuit and configured to have a portion of the coolant in the pump downstream portion being selectively passed therethrough, the first coolant heating circuit comprising a heater configured to preheat the portion of the coolant before starting up the fuel cell system; a second coolant heating circuit coupled to the main cooling circuit and configured to have a portion of the coolant in the pump downstream portion being selectively passed therethrough, the second heating circuit comprising a cabin heater configured to regulate a temperature in a cabin of the fuel cell vehicle; and a third coolant heating circuit coupled to the main cooling circuit and configured to have a portion of the coolant in the pump downstream portion being selectively passed therethrough, the third coolant heating circuit comprising a cryogenic hydrogen storage heater configured to regulate a temperature of a cryogenic hydrogen storage of the fuel cell vehicle.

In some examples, the thermal management system comprises a fourth coolant heating circuit coupled to the main cooling circuit and comprising a coolant ion filter, the fourth coolant heating circuit being configured to have a portion of the coolant being passed therethrough and through the coolant ion filter.

The technical benefits may include providing a simplified system in which the coolant flows to components such as the coolant heater, the cabin heater, the cryogenic hydrogen storage heater, and in some cases the coolant ion filter are controlled in a unified manner. The first, second, third, and fourth coolant heating circuits are assembled into a relatively simple, straightforward configuration that facilitates control of the coolant flows in accordance with requirements in a fuel cell vehicle or in a stationary system. Accordingly, efficiency of operation and maintenance of the thermal management system is increased. As another advantage, a fault diagnosis of the thermal management system may be simplified.

In some examples, the thermal management system may comprise a directional valve set, comprising at least one valve, which is configured to allow the coolant to be selectively passed at least through the first, second, and third coolant heating circuits.

The technical benefits include a relatively simple configuration of the valves in the directional valve set that can be controlled in a straightforward manner.

In some examples, the directional valve set may comprise a first directional valve positioned so as to direct a flow of the coolant to the first coolant heating circuit and/or to the second and third coolant heating circuits, and a second directional valve positioned downstream of the first directional valve, the second directional valve being positioned so as to direct a flow of the coolant to the second coolant heating circuit and/or to the third coolant heating circuit.

In some examples, the directional valve set may comprise several one-way valves. In some examples, the directional valve set may comprise one four-way valve.

The technical benefits may include a relatively simple configuration of the valves in the directional valve set that can be controlled in a straightforward manner. For example, in some examples, only two valves such as the first directional valve and the second directional valve may need to be controlled to increase a temperature of the coolant in the desired coolant heating circuits.

In some examples, the thermal management system may comprise a loop comprising the pump upstream portion and the pump downstream portion, the loop encompassing the first, second, third, and fourth coolant heating circuits. In some examples, the loop may comprise a common forward line in fluid communication with the main cooling circuit and comprising the pump downstream portion, the common forward line being configured to carry the coolant towards the first, second, third, and fourth coolant heating circuits; and a common return line in fluid communication with the main cooling circuit and comprising the pump upstream portion, the common return line being configured to carry the coolant that has passed through one or more of the first, second, third, and fourth coolant heating circuits.

The technical benefits may include a straightforward assembly of the first, second, third, and fourth coolant heating circuits into a configuration that allows managing or controlling the coolant heating circuits in a unified manner.

In some examples, the thermal management system may comprise an enclosure encompassing at least the coolant pump and the first, second, third and fourth coolant heating circuits.

The technical benefits may include arrangement of the first, second, third and fourth coolant heating circuits and of the coolant pump, as well as possibly other components of the thermal management system, into the same package or other structure. In this way, these components can be serviced and/or replaced as a single unit, which facilitates maintenance of the thermal management system.

In an aspect, a fuel cell vehicle is provided that comprises a thermal management system in accordance with aspects and examples of the present disclosure.

In an aspect, a stationary system is provided that comprises a thermal management system in accordance with aspects and examples of the present disclosure.

In an aspect, a method of operating a thermal management system for a fuel cell vehicle is provided. The thermal management system comprises a main cooling circuit configured to have a coolant circulating therein to regulate a temperature of the fuel cell system, the main cooling circuit comprising a coolant pump configured to pump the coolant through the main cooling circuit, and the main cooling circuit comprising a pump downstream portion located downstream of the pump and a pump upstream portion located upstream of the pump, the thermal management system comprising, coupled to main cooling circuit, a first coolant heating circuit comprising a heater configured to preheat a portion of the coolant before starting up the fuel cell system, a second coolant heating circuit comprising a cabin heater configured to regulate a temperature in a cabin of the fuel cell vehicle, and a third coolant heating circuit comprising a cryogenic hydrogen storage heater configured to regulate a temperature of a cryogenic hydrogen storage of the fuel cell vehicle. The method comprises, once the fuel cell system has started, in response to determining that operation of one or both the cabin heater and the cryogenic hydrogen storage heater is required, controlling the thermal management system so that the portion of the coolant flows through one or both the second coolant heating circuit comprising the cabin heater and the third coolant heating circuit comprising the cryogenic hydrogen storage heater.

The technical benefits may include providing a simplified system in which coolant flows to components such as the coolant heater, the cabin heater, the cryogenic hydrogen storage heater, and in some cases the coolant ion filter are controlled in a unified manner. The first, second, third, and fourth coolant heating circuits are assembled into a relatively simple, straightforward configuration that facilitates control of the coolant flows in accordance with requirements in the vehicle. Accordingly, efficiency of operation and maintenance of the thermal management system is increased. As another advantage, a fault diagnosis of the thermal management system may be simplified.

In some examples, the method may comprise, in response to determining that a cold start of the fuel cell system is expected, controlling the thermal management system so that the portion of the coolant flows through the first coolant heating circuit comprising the heater configured to preheat the portion of the coolant before starting up the fuel cell system.

In some examples, the thermal management system may comprise a directional valve set, comprising at least one valve, which is configured to allow the coolant to be selectively passed at least through the first, second, and third coolant heating circuits.

In some examples, the method may comprise, in response to determining that the cold start of the fuel cell system is expected, controlling the thermal management system by operating the directional valve set, the operating the directional valve set preferably comprises operating a first directional valve of the directional valve set, to allow the portion of the coolant to flow through the first coolant heating circuit to preheat the portion of the coolant before starting up the fuel cell system

In some examples, the method may comprise, once the fuel cell system has started, in response to determining that operation of one or both the cabin heater and the cryogenic hydrogen storage heater is required, controlling the thermal management system by operating the directional valve set, the operating the directional valve set preferably comprises operating a second directional valve of the directional valve set, to direct the portion of the coolant to one or both the second coolant heating circuit and the third coolant heating circuit.

In some examples, the thermal management system may comprise a fourth coolant heating circuit comprising a coolant ion filter, the fourth coolant heating circuit being configured to have a portion of the coolant being passed therethrough and through the coolant ion filter, the method comprising controlling the thermal management system so that the portion of the coolant flows through the fourth coolant heating circuit and through the coolant ion filter.

In some examples, the method may comprise initiating the controlling of the thermal management system, so that the portion of the coolant flows through the fourth coolant heating circuit and through the coolant ion filter, before the fuel cell system has started.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control systems, units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a side view of an electric vehicle in which a method in accordance with examples of the present disclosure may be implemented.
**FIG. 2** is a diagram illustrating a thermal management system in accordance with examples of the present disclosure.
**FIG. 3A** is a flowchart illustrating an example of a method of operating a thermal management system for a fuel cell vehicle, in accordance with examples of the present disclosure.
**FIG. 3B** is another flowchart illustrating the method of FIG. 3A.
**FIG. 4** is a schematic diagram of a computer system for implementing examples in accordance with the present disclosure.

### DETAILED DESCRIPTION

The detailed description set forth below provides information and examples of the disclosed technology with sufficient detail to enable those skilled in the art to practice the disclosure.

Fuel cell vehicles or stationary systems comprising one or more fuel cell systems include one or more cooling systems or units that allow maintaining adequate temperatures of the fuel cell system and other components of the vehicles or stationary systems. A cooling system typically comprises multiple distributed components and it may be a challenge to manage them in a fuel cell vehicle or a stationary system to ensure proper heating and cooling.

In accordance with examples of the present disclosure, a modified cooling system for a thermal management system of a fuel cell vehicle or a stationary system is provided. In the cooling system in accordance with examples of the present disclosure, a coolant circulating in the cooling system can be selectively passed through one or more of a first, second, and third coolant circuits. The first coolant circuit comprises a heater configured to preheat the coolant before starting up a coolant pump, the second coolant bypass circuit comprises a cabin heater configured to regulate a temperature in a cabin of the fuel cell vehicle, and a third coolant bypass circuit comprises a cryogenic hydrogen storage heater configured to regulate a temperature of a cryogenic hydrogen storage of the fuel cell vehicle. In some examples, the thermal management system comprises a fourth coolant heating circuit coupled to the main cooling circuit and comprising a coolant ion filter, the fourth coolant heating circuit being configured to have a portion of the coolant being passed therethrough and through the coolant ion filter.

The thermal management system and a method of its operation using the techniques in accordance with examples of the present disclosure allow reducing complexity of a fuel cell vehicle or a stationary system while utilizing heating/cooling power of a coolant circulating in the cooling system of the thermal management system.

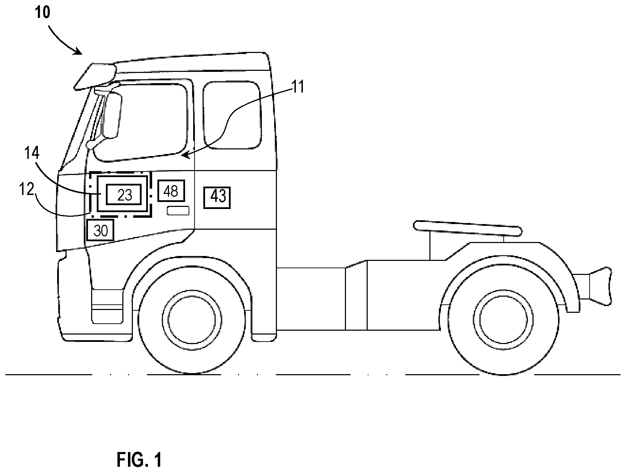

**FIG. 1** depicts a side view of a fuel cell vehicle 10 according to an example of the present disclosure. The fuel cell vehicle 10 is shown as a truck, such as a heavy-duty truck for towing one or more trailers. The fuel cell vehicle 10 comprises a cab or cabin 11. The fuel cell vehicle 10 may be a fuel cell electric vehicle or a hybrid vehicle comprising a fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel. The present disclosure can also be used in a stationary system or machine and/or in a genset.

As shown schematically in FIG. 1, the fuel cell vehicle 10 comprises a thermal management system 12 comprising a fuel cell system 14 and a cooling system. The fuel cell vehicle 10 also comprises a controller or control system 30 configured to control operation of the thermal management system 12.

The cooling system comprises a coolant circulating through the system, and a temperature of the coolant is controlled to control a desired and/or required temperature of components of the thermal management system. Thus, in examples herein, the cooling system may be configured to selectively direct coolant to a coolant heater to preheat the coolant before it is supplied to the fuel cell system, a cabin heater configured to regulate a temperature inside the cabin 11 of the vehicle 10, and to a cryogenic hydrogen storage heater configured to preheat hydrogen stored in a cryogenic hydrogen storage 48. In some implementations, the cooling system may also be configured to selectively direct coolant to a coolant ion exchange filter that is configured to remove ions from the coolant to keep electrical conductivity of the coolant below a certain level which is referred to herein as a coolant conductivity threshold. The heaters may be configured as heat exchangers.

The techniques in accordance with the present disclosure allow controlling operation of these heaters as part of the thermal management system in a simplified manner that allows minimizing thermal losses. Moreover, the components are arranged in a relatively simple configuration in the same component assembly. They are positioned close to each other which allows responding quickly to changes in requirements regarding cooling needs.

The fuel cell system 14 may be used for powering one or more electric drive motors which are used for creating a propulsion force to the vehicle 10. The fuel cell system 14 may also be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 14 may thus be used for powering one or more power take-off (PTO) devices which rely on transferring an electric motor's mechanical power to another piece of equipment.

The fuel cell system 14 comprises two or more fuel cells which together form a fuel cell stack 23 shown in FIG. 1. The fuel cell system 14 is arranged to provide the fuel cells stack with necessary supply of hydrogen fuel (H₂) and air or oxygen, cooling, heating, etc., and the fuel cell system 14 may include various components which are not shown herein. The fuel cell system 14 may comprise multiple fuel cell systems. Thus, in some examples, the fuel cell system 14 may include two fuel cell systems. In some examples, the fuel cell system 14 may include more than two fuel cell systems, such as three or more than three fuel cell systems.

The fuel cell stack 23 comprises an anode or anode side, a cathode or cathode side, and an electrolyte such as e.g. a proton exchange membrane (PEM) sandwiched between the anode and cathode. The anode side receives fuel such as hydrogen gas that may be supplied e.g. from a fuel storage container. In some examples, as shown in FIG. 1, the vehicle 10 may comprise a cryogenic hydrogen storage 48 configured to store hydrogen in a liquid form. The liquid hydrogen stored in the cryogenic hydrogen storage 48 needs to be heated in order to vaporize the hydrogen through heat exchange whereby the hydrogen is converted into a gas of a temperature suitable to be supplied to the fuel cell stack 23.

The control system 30 is configured to control components of the vehicle by issuing control signals and by receiving status information relating to the components. The control system 30 may be configured to receive information from various sensors, including one or more of temperature sensors, moisture sensors, pressure sensors, and other sensors included in or associated with the fuel cell system 14 and/or the vehicle 10.

It should be appreciated that the fuel cell system 14 may be controlled by a separate controller, such as e.g. a fuel cell control unit (FCCU). The FCCU controls operation of the fuel cell system and its individual sub-systems, such as a hydrogen supply, air supply, thermal and water-management, and others. In some examples, the FCCU may be part of the control system 30 that is configured to control operation of other components of the vehicle 10 including the thermal management system 12.

The control system 30 may include and/or may be communicatively coupled to an internal database, an external database, or a combination thereof, to receive historical data related to driver's driving pattern, historical data on the vehicle operation e.g. locations traveled by the vehicle, frequency and locations of stops, historical data on ambient conditions, etc. The control system 30 may be configured to receive data from a global positioning system (GPS). The vehicle 10 may be equipped with a GPS device such as a GPS tracker, and the control system 30 may receive information related to a current location of the vehicle 30. In some examples, the control system 30 may access data stored in a cloud storage and/or may store data in the cloud storage.

The control system 30 may be an electronic control unit (ECU). The control system 30 may include a microprocessor, microcontroller, programmable digital signal processor or another programmable device. The control system 30 may comprise electronic circuits and connections as well as processing circuitry that is adapted and/or configured to execute a computer program such as computer-executable instructions, to cause the control system 30 to perform a method according to aspects of the present disclosure. The control system can communicate with different parts of the fuel cell system or any other components of the vehicle in order to provide the functions of the examples in accordance with aspects of the present disclosure. The processing circuitry may be a general purpose processor or a specific processor.

In some examples, the control system 30 may be denoted a computer. The control system 30 may be constituted by one or more separate sub-units, and the control system 30 may communicate by use of wired and/or wireless communication technology.

As shown in FIG. 1, the fuel cell vehicle 10 comprises an electrical storage system (ESS) 43 such as e.g. one or more batteries and/or one or more supercapacitors for storing electric energy, including excess electric energy produced by the fuel cell system 14. The ESS 43 may store energy regenerated during braking such as regenerative braking, and/or it may be configured for charging by a charger, such as, e.g., from an external power grid. The ESS 43 is configured to assist the fuel cell system 14 in supplying energy to the drive motor, to meet power/energy demands of the vehicle 10. The ESS 43 is configured to provide energy to start up a coolant heater, as discussed below.

In some examples, the ESS 43 can provide power to one or more auxiliary systems of the vehicle 10. The ESS 43 may be configured to provide additional propulsive power in situations when the complete required power cannot be provided by fuel cell system 14, or when it is not suitable to provide the complete required power by the fuel cell system 14.

The fuel cell vehicle 10 also comprises various other components not shown in FIG. 1.

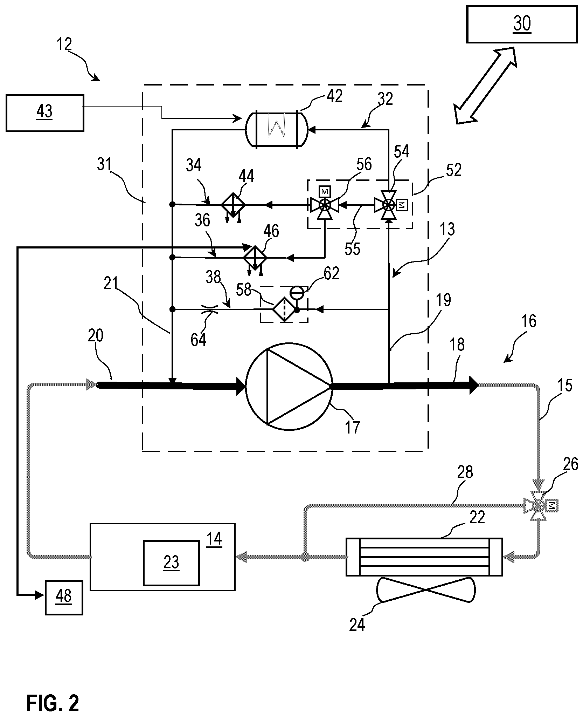

**FIG. 2** illustrates an example of the thermal management system 12 of the fuel cell vehicle 10. The thermal management system 12 comprises a fuel cell system 14 and a cooling system 16. The cooling system 16 comprises a main cooling circuit 15 configured to have a coolant circulating therein to regulate a temperature of the fuel cell system 14. The main cooling circuit 15 comprises a coolant pump 17 configured to pump the coolant through the main cooling circuit 15. The main cooling circuit comprises a pump downstream portion 18 located downstream of the pump 17 and a pump upstream portion 20 located upstream of the pump 17. A differential pressure from the coolant pump 17 drives the flow of the coolant in the main cooling circuit 15. As used herein, downstream is defined as a location or position further away from the pump 17, in a direction of flow of coolant away from the pump 17. Also as used herein, upstream is defined as a location or position in a direction of flow of coolant towards the pump 17. Thus, the coolant flows away from the pump 17 via the pump downstream portion 18 and towards the pump 17 via the pump upstream portion 20. It should be noted that the pump downstream and upstream portions are defined for description purposes, since the coolant is circulated through the main cooling circuit 15.

The fuel cell system 14 comprises the fuel cell stack 23 shown in FIG. 2, and the fuel cell system 14 may comprise various other components not shown in FIG. 2.

As shown in FIG. 2, the main cooling circuit 15 comprises a cooling radiator 22 and a coolant bypass valve 26 that is configured to direct the coolant through a radiator bypass line or pass 28. The radiator 22, which may be associated with a heat dissipation fan 24, can be exposed to the ambient environment so that the coolant exchanges heat with the air in the ambient environment. The heat dissipation fan 24 is configured to supply the air from the outside to the radiator 22, to increase heat exchange efficiency.

As further shown in FIG. 2, the thermal management system 12 comprises a first coolant heating circuit 32, a second coolant heating circuit 34, and a third coolant heating circuit 36. In some examples, the thermal management system 12 may also comprise a fourth coolant heating circuit 38. The thermal management system 12 may comprise a circuit or loop 13 comprising a portion of the pump upstream portion 20 and a portion of the pump downstream portion 18, the loop encompassing the first, second, third, and fourth coolant heating circuits 32, 34, 36, 38. The loop 13 comprises a common forward branch or line 19 in fluid communication with the main cooling circuit 15 and comprising the portion of the pump downstream portion 18, the common forward line 19 being configured to carry the coolant towards the first, second, third, and fourth coolant heating circuits 32, 34, 36, 38. The loop 13 comprises a common return branch or line 21 in fluid communication with the main cooling circuit 15 and comprising the portion of the pump upstream portion 20, the common return line 21 being configured to carry the coolant that has passed through one or more of the first, second, third, and fourth coolant heating circuits 32, 34, 36, 38. As shown in FIG. 2, the common forward line 19 is configured to carry the coolant in a direction away from the pump 17, and the common return line 21 is configured to receive the coolant from each of the first, second, third, and fourth coolant heating circuits 32, 34, 36, 38.

Thus, the first, second, third, and fourth coolant heating circuits 32, 34, 36, 38 are arranged or assembled into the common arrangement, referred to herein as the circuit or loop 13 which allows selectively passing the coolant through the associated heaters in a straightforward manner. Accordingly, the first, second, third, and fourth coolant heating circuits 32, 34, 36, 38 and associated components are arranged in a relatively simple manner which greatly facilitates management and control of the thermal management system 12. Also, assembly of the components of the thermal management system 12 advantageously has a reduced complexity.

In some examples, as shown in FIG. 2, the thermal management system 12 comprises an enclosure 31 encompassing at least the coolant pump 17 and the first, second, third and fourth coolant heating circuits 32, 34, 36, 38. Thus, the first, second, third and fourth coolant heating circuits 32, 34, 36, 38 and the coolant pump 17, as well as in some cases other components of the thermal management system 12, may be positioned inside a common physical enclosure that allows servicing and replacing these components together. In vehicles, e.g. in large trucks, space constraints may be a challenge. Thus, when components are clustered together into a common assembly, a build time in production decreases, fewer control and power cables may need to be used, and a control of the assembly is simplified. In some implementations, operation of at least the coolant pump 17 and the first, second, third and fourth coolant heating circuits 32, 34, 36, 38 may be controlled via one controller area network (CAN) line.

The first coolant heating circuit 32 is coupled to the main cooling circuit 15 and is configured to have a portion of the coolant in the pump downstream portion 18 being selectively passed therethrough. The first coolant heating circuit 32 comprises a coolant heater 42 configured to preheat the portion of the coolant before starting up the fuel cell system 14. The coolant heater 42 is configured to induce heat to the coolant. Thus, operation of the coolant heater 42 allows avoiding or mitigating a cold start of the fuel cell system 14, due to preheating the fuel cell stack 23 of the fuel cell system. The cold start may occur in cold climates and/or at cold temperatures. For example, the fuel cell vehicle 10 may be parked outside at cold ambient temperatures and the coolant to be passed through the fuel cell system will need to be preheated to ensure proper start of the fuel cell system. In some examples, a cold start may occur when an outside temperature is below 5 °C, though other values may be used to define the cold start.

The coolant heater 42 may be activated by extracting energy from the energy storage system (ESS) 43, such as a battery or battery pack, as shown schematically in FIG. 2.

The second coolant heating circuit 34 is also coupled to the main cooling circuit 15 and is configured to have a portion of the coolant in the pump downstream portion 18 being selectively passed therethrough. The second heating circuit 34 comprises a cabin heater 44 configured to regulate a temperature in the cabin 11 of the fuel cell vehicle 10 by extracting coolant energy for heating the cabin 11. The cabin heater 44 may be or may comprise a parking heater. Although not shown herein, the cabin heater 44 may be connected to various components that allow the cabin heater 44 to deliver heat to the cabin 11 of the fuel cell vehicle 10.

The third coolant heating circuit 36 is also coupled to the main cooling circuit 15 and is configured to have a portion of the coolant in the pump downstream portion 18 being selectively passed therethrough. The third coolant heating circuit 36 comprises a cryogenic hydrogen storage heater 46 configured to regulate a temperature of a cryogenic hydrogen storage 48 of the fuel cell vehicle 10. The cryogenic hydrogen storage 48 is configured to store hydrogen fuel that is supplied to the fuel cell stack 23. The hydrogen fuel may be stored in the cryogenic hydrogen storage 48 in a cooled liquid from. In some examples, the hydrogen can be referred to as Subcooled Liquid Hydrogen (sLH2). Heat energy may be directed to the cryogenic hydrogen storage 48 to control a boil-off speed of the stored hydrogen. Thermal heat can be extracted from the coolant to transform cryogenic hydrogen into the gaseous hydrogen in a heat exchanger.

The cryogenic hydrogen storage 48 may be a tank or container configured to store hydrogen in a liquid form while achieving a temperature of about -253°C or about -256°C or in a range of from -256°C to -253°C, at 1 atm pressure. Before the hydrogen is supplied to the fuel cell stack from the cryogenic hydrogen storage 48, the hydrogen needs to be heated to transform it into a gaseous form. A portion of the heat is injected back to the cryogenic hydrogen storage 48, via a heating component such as a pipe or an electrical heater, or indirectly, to control a pressure in the cryogenic hydrogen storage 48. A control of the pressure in the cryogenic hydrogen storage 48 in what is driving the flow of hydrogen out of the cryogenic hydrogen storage 48.

The thermal management system may comprise a directional valve set 52 comprising at one or more valves that are configured to allow the coolant to be selectively passed at least through the first, second, and third coolant heating circuits 32, 34, 36. In some examples, the directional valve set 52 may comprise a first directional valve 54 and a second directional valve 56. The first directional valve 54 may be positioned so as to direct a flow of the coolant to the first coolant heating circuit 32 and/or, via a line or branch 55 shown in FIG. 2, to the second and/or third coolant heating circuits 34, 36. The first directional valve 54 may be a three-way proportional valve.

In some examples, the directional valve set 52 may comprise one three-way valve or one four-way valve. In some examples, the directional valve set 52 may comprise a set of four one-way valves. Any other number of valves may be used.

The second directional valve 56 may be positioned downstream of the first directional valve 54, the second directional valve 56 being positioned so as to direct a flow of the coolant to the second coolant heating circuit 34 and/or to the third coolant circuit 36. The second directional valve 56 may be a two-way proportional valve. As shown in FIG. 2, the second directional valve 56 may be operated to allow the coolant to flow to the second coolant heating circuit 34 comprising the cabin heater 44 and/or to the third coolant circuit 36 comprising the cryogenic hydrogen storage heater 46. The delivery of the coolant to the second and third coolant heating circuits 36, 38 also depends on the control of the first directional valve 54.

The thermal management system 12 may comprise the fourth coolant heating circuit 38 coupled to the main cooling circuit 15 and comprising a coolant ion exchange filter or coolant ion filter 58 that is configured to remove ions from the coolant to keep electrical conductivity of the coolant below a certain level. The fourth coolant heating circuit 38 is configured to have a portion of the coolant being passed therethrough and through the coolant ion exchange filter 58. The coolant ion exchange filter 58 may be coupled to or otherwise associated with an ion sensor 62 configured to detect ions such as charged particles in the coolant. In the example of FIG. 2, the coolant circulating in the main cooling circuit 15 may be passed through the fourth coolant heating circuit 38 when the thermal management system 12 is in operation. The fourth coolant heating circuit 38 may comprise a flow restrictor 64 as shown in the example of FIG. 2.

The arrangement of the components of the thermal management system 12 in the loop 13 comprising the first, second, third, and fourth coolant heating circuits 32, 34, 36, 38 advantageously provides a relatively simple system that can be controlled to deliver the coolant to the circuits 32, 34, 36, 38. The components of the first, second, third, and fourth coolant heating circuits 32, 34, 36, 38 are arranged together in a straightforward configuration, in the manner that allows supplying the coolant to these circuits while using a reduced number of piping and control components such as the directional valve set 52.

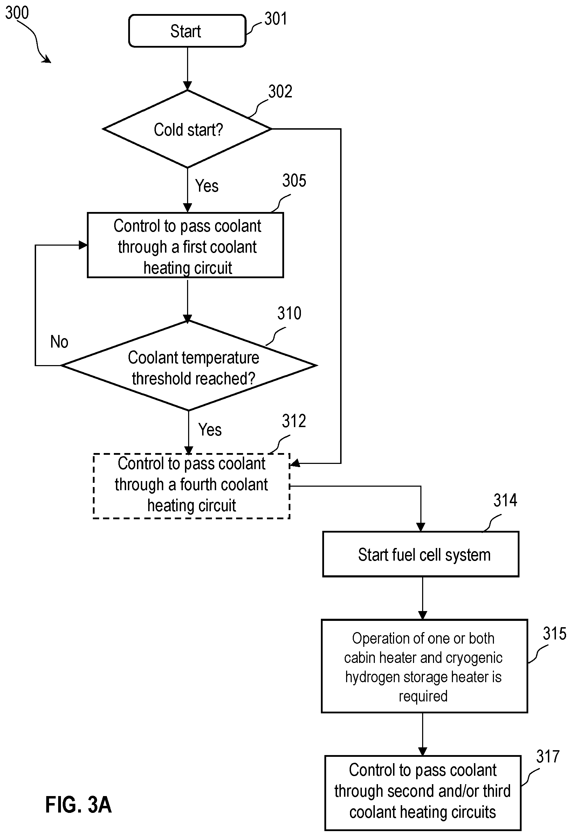

**FIG. 3A** illustrates an example of a process or method 300 of operating a thermal management system for a fuel cell vehicle, such as e.g. the thermal management system 12 for the fuel cell vehicle 10. It should be appreciated that the method or process 300 may be performed in a stationary system comprising the thermal management system 12, as examples of the present disclosure are not limited to fuel cell vehicles.

The thermal management system 12 may comprise the main cooling circuit 15 configured to have a coolant circulating therein to regulate a temperature of the fuel cell system 14, the main cooling circuit 15 comprising the coolant pump 17 configured to pump the coolant through the main cooling circuit 15. The main cooling circuit 15 comprises the pump downstream portion 18 located downstream of the pump 17 and the pump upstream portion 20 located upstream of the pump. The thermal management system 12 comprises, coupled to main cooling circuit 15, the first coolant heating circuit 32 comprising the coolant heater 42 configured to preheat a portion of the coolant before starting up the fuel cell system 14, the second coolant heating circuit 34 comprising the cabin heater 44 configured to regulate a temperature in a cabin of the fuel cell vehicle 10, and the third coolant heating circuit 36 comprising the cryogenic hydrogen storage heater 46 configured to regulate a temperature of the cryogenic hydrogen storage 48 of the fuel cell vehicle 10.

The process 300 may be performed by the control system 30 of the fuel cell vehicle 10 or by another suitable control system or device. The processing circuitry of the control system 30 is configured to execute computer-executable instructions to cause the control system 30 to perform the method according to aspects of the present disclosure.

At **block 301,** the process 300 may start at a suitable time. In some examples, the process 300 may begin or may be activated once the fuel cell vehicle 10 is turned on or started. For example, the fuel cell vehicle 10 may be parked at a certain location. In some examples, the process 300 may begin or may be activated before the fuel cell vehicle 10 is turned on or started, e.g., in anticipation that a start of the fuel cell vehicle and of the fuel cell system is predicted.

At decision **block 302,** the control system may determine whether a start of the fuel cell system 14, which may be the actual start or a predicted start, is a cold start. Thus, in some examples, the control system may determine whether a cold start of the fuel cell system is expected. As used herein, the cold start refers to starting the fuel cell system 14 of the vehicle 10 when a temperature of an environment surrounding the fuel cell system 14 is below a certain cold start threshold temperature. In some examples, a temperature of the fuel cell system 14 may be monitored to determine whether a cold start is expected. The cold start threshold temperature may be below 5 °C. In some examples, the cold start threshold temperature may be below 0 °C, e.g., below -10 °C, or below -20 °C, or below -30 °C. The fuel cell system is required to be brought up to a certain temperature before it can be started in a manner that does not have damaging effect.

At **block 305,** the control system may, in response to determining that the start of the fuel cell system 14 is a cold start, control the thermal management system 12 to pass the coolant through the first coolant heating circuit 32 comprising the coolant heater 42 configured to preheat a portion of the coolant before starting up the fuel cell system 14. The first directional valve 54 may be controlled to allow a portion of the coolant to pass through the first coolant heating circuit 32.

The energy or power stored in the ESS 43 may be used to activate the coolant heater 42. With reference to the example implementation shown in FIG. 2, the coolant pump 17 is activated, the first directional valve 54 is controlled to allow the coolant to flow to the first coolant heating circuit 32, and the coolant heater 42 is activated. Thus, a portion of the coolant passing through the coolant heater 42 will be heated.

As shown in FIG. 3A, if the control system determines that the start of the fuel cell system 14 is not a cold start, the process 300 may follow to block 312.

At decision **block 310,** the control system may determine whether a coolant temperature threshold has been reached after the coolant heater 42 has been activated to preheat the portion of the coolant before starting up the fuel cell system 14. The coolant temperature threshold refers to a temperature of the coolant that is considered to be appropriate for starting and operation of the fuel cell system. In response to determining that the coolant temperature threshold has not been reached after the coolant heater 42 has been activated, the process 300 may return to block 305. The coolant temperature threshold may be determined by the fuel cell system 14.

In some non-limiting examples, the coolant temperature threshold may be 80 °C, or 81 °C, or 82 °C, or 83 °C, or 84 °C, or 85 °C, or 86 °C, or 87 °C, or 88 °C, or 89 °C, or 90 °C, or from 80 °C to 90 °C. The coolant temperature threshold may have other values.

At **block 312,** in response to determining that the coolant temperature threshold has been reached after the coolant heater 42 has been activated, the control system controls the thermal management system, e.g., the coolant pump 17, so that the portion of the coolant flows through the fourth coolant heating circuit and through the coolant ion filter 58, before the fuel cell system has started. In some examples, e.g., after the vehicle or another system comprising the fuel cell system has been parked for a certain duration of time with the fuel cell system being shut down, the conductivity of the coolant increases. Thus, the coolant pump 17 is activated and the coolant begins to circulate through the coolant ion filter 58 to thereby reduce the conductivity of the coolant. The coolant is thus de-ionized in the coolant ion filter 58. In this way, the coolant circulating in the cooling system 16, including the lines of the loop 13, is maintained to be non-conductive or having a low conductivity value such as the value below the coolant conductivity threshold.

At block 312, if it is determined at block 302 that the cold start is not expected and preheating of the coolant may therefore not be needed, the coolant pump 17 is activated and the coolant ion filter 58 is activated so that the electrical conductivity of the coolant is brought or maintained below the coolant conductivity threshold.

At **block 314,** after the portion of the coolant began to flow through the fourth coolant heating circuit, the fuel cell system can be activated or started. The fuel cell system begins to generate energy once it is started, using the hydrogen as fuel and oxygen or air as oxidant.

At **block 315,** the control system may determine that operation of one or both the cabin heater and the cryogenic hydrogen storage heater is required.

At **block 317,** the control system may, once the fuel cell system has started, in response to determining that operation of one or both the cabin heater 44 and the cryogenic hydrogen storage heater 46 is required, control the thermal management system so that the portion of the coolant flows through one or both the second coolant heating circuit 34 comprising the cabin heater 44, and the third coolant heating circuit 36 comprising the cryogenic hydrogen storage heater 46 configured to supply heat to the cryogenic hydrogen storage 48. The first directional valve 54 and the second directional valve 56 may be controlled so as to allow the portion of the coolant to flow through one or both the second coolant heating circuit 34 and the third coolant heating circuit 36.

The first directional valve 54 may be operated to allow a portion of the coolant to be directed towards the second and third coolant heating circuits 34, 36, to a line or branch 55 shown in FIG. 2. Furthermore, in some examples, in response to determining that operation of one or both the cabin heater 44 and the cryogenic hydrogen storage heater 46 is required, the control system may control the thermal management system 12 by operating the directional valve set 52, the operating the directional valve set 52 preferably comprising operating the second directional valve 56 of the directional valve set 52, to direct the portion of the coolant to one or both the second coolant heating circuit 34 and the third coolant heating circuit 36.

In some examples, the cryogenic hydrogen storage heater 46 may not be operated continuously as the vehicle is traveling the route - depending on a pressure in the cryogenic hydrogen storage 48 and the ambient temperature, it may be sufficient to operate the cryogenic hydrogen storage heater 46 to extract hydrogen from the cryogenic hydrogen storage 48 when the fuel cell system is started.

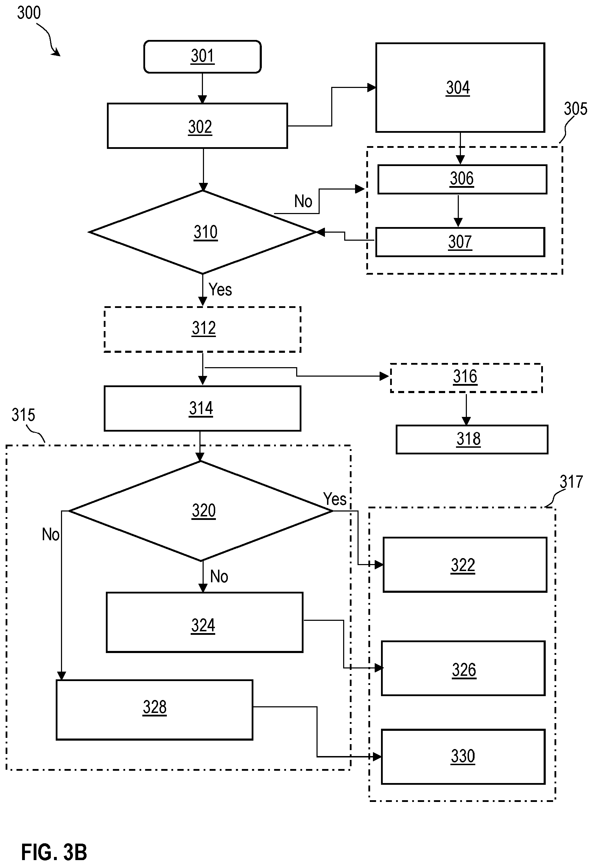

**FIG. 3B** illustrates in more detail an example of the method 300 shown in FIG. 3A.

The process may start at **block 301** and it may be determined, at **block 302,** that the cold start of the fuel cell system is expected. FIG. 3B illustrates an example when it is determined that the cold start of the fuel cell system is expected.

At **block 304,** in response to determining that the cold start of the fuel cell system is expected, the control system may set one or both a coolant flow setpoint and a speed setpoint for the coolant pump 17. The coolant flow setpoint may be defined as a base volume flow of the coolant that the coolant pump 17 is operated to maintain. Thus, the coolant pump 17 may be automatically activated if the coolant flow is below the coolant flow setpoint. The speed of the coolant pump 17 may be adjusted to reach the speed setpoint, wherein the pump speed at or above the speed setpoint allow achieving the coolant flow at or above the coolant flow setpoint.

At **block 306,** the control system may operate or control operation of the first directional valve 54 of the directional valve set 52 to allow the portion of the coolant to flow through the first coolant heating circuit 32 comprising the coolant heater 42. Thus, in response to determining that the cold start of the fuel cell system is expected, the control system may control the thermal management system by operating the directional valve set 52, the operating the directional valve set 52 preferably comprises operating the first directional valve 54 of the directional valve set 52, to allow the portion of the coolant to flow through the first coolant heating circuit to preheat the portion of the coolant before starting up the fuel cell system. The coolant is preheated by the coolant heater 42.

Thus, at **block 307,** the coolant heater 42 may be started to preheat the portion of the coolant before starting up the fuel cell system. As shown in FIG. 3B, the processing at blocks 306 and 307 may be performed as part of the processing at block 305 of FIG. 3A.

At decision **block 310,** the control system may determine whether a coolant temperature threshold has been reached after the coolant heater 42 has been activated to preheat the portion of the coolant. The coolant temperature threshold refers to a temperature of the coolant that is considered to be appropriate to activate the fuel cell system. In response to determining that the coolant temperature threshold has not been reached after the coolant heater 42 has been activated, the process 300 may return to block 305. It should be appreciated that the coolant heater 42, once started at block 307, is operated to warm up the coolant until the coolant temperature threshold is reached.

At **block 312,** once the coolant temperature threshold is reached due to operation of the coolant heater 42 to increase the temperature of the coolant, the control system may control the coolant ion filter 58 to be activated or started. Electrical conductivity of the coolant is controlled due to operation of the coolant ion filter 58 that is configured to keep electrical conductivity of the coolant low, such as below the coolant conductivity threshold. This allow protecting the fuel cell stack against short circuits which increases reliability and lifespan of the fuel cell stack.

The processing at block 312 of FIG. 3B may comprise the processing as at block 312 of FIG. 3A, and the same numerical reference is therefore used. As discussed in connection with FIG. 3A, if the coolant preheating is not needed because the cold start of the fuel cell system is not expected, the coolant pump 17 may be activated and the coolant ion filter 58 may be activated so that the electrical conductivity of the coolant is brought or maintained below the coolant conductivity threshold.

At **block 314,** once the coolant temperature threshold is reached due to operation of the coolant heater 42 to increase the temperature of the coolant, the control system may control the fuel cell system to be activated or started.

At **block 316,** the control system may control the coolant heater 42 to be deactivated or stopped. This may be performed before or after the fuel cell system has been started at block 314.

At **block 318,** the control system may control the first directional valve 54 so that the coolant is prevented from flowing or passing through the first coolant heating circuit 32 comprising the coolant heater 42. It should be noted that the processing at blocks 316 and 318 may be performed in any suitable order or simultaneously.

At decision **block 320,** the control system may determine whether there is a request for both cabin heat and cryogenic hydrogen storage heat. In other words, the control system may determine whether a request is received, e.g., from a user of the fuel cell vehicle 10 and/or from a system or device in the fuel cell vehicle 10, to increase a temperature in the cabin of the vehicle 10 by activating the cabin heater 44, and to increase a temperature of the cryogenic hydrogen storage heater 46.

At **block 322,** in response to determining that there is a request for the cabin heat and cryogenic hydrogen storage heat, the control system may control the first and second directional valves 54, 56 to allow the coolant to be selectively passed to and through both the second coolant heating circuit 34 and the third coolant heating circuit 36. The thermal management system may be controlled by operating the directional valve set 52, the operating the directional valve set 52 preferably comprising operating the first directional valve 54 and the second directional valve 56 of the directional valve set 52, to direct the portion of the coolant to both the second coolant heating circuit 34 and the third coolant heating circuit 36.

In response to determining at block 320 that the request is not for the both of the cabin heat and cryogenic hydrogen storage heat, the process 300 may proceed to block 324 or block 328, depending on whether the request is for the cabin heat or for the cryogenic hydrogen storage heat.

At **block 324,** the control system may determine that the request is for the cabin heat only. As used herein, the request for the cabin heat only indicates that the request for activation of the cabin heater 44 in the second coolant heating circuit 34 is received whereas a request for activation of the cryogenic hydrogen storage heater 46 in the third coolant heating circuit 36 is not received.

At **block 326,** when the control system determines that the request is for the cabin heat, the control system may control the first and second directional valves 54, 56 to allow the coolant to be selectively passed to the second coolant heating circuit 34 and through the cabin heater 44. The cabin heater 44 is activated to increase the temperature in the cabin of the vehicle 10.

At **block 328,** the control system may determine that the request is for the cryogenic hydrogen storage heat only. As used herein, the request for the cryogenic hydrogen storage heat only indicates that the request for activation of the cryogenic hydrogen storage heater 46 in the third coolant heating circuit 36 is received whereas a request for activation of the cabin heater 44 in the second coolant heating circuit 34 is not received.

At **block 330,** when the control system determines that the request is for the cryogenic hydrogen storage heat only, the control system may control the first and second directional valves 54, 56 to allow the coolant to be selectively passed to the third coolant heating circuit 36 and through the cryogenic hydrogen storage heater 46. The cryogenic hydrogen storage heater 46 is activated to increase the temperature of the hydrogen fuel stored in the cryogenic hydrogen storage heater 46.

As shown in FIG. 3B, the processing at blocks 320, 324, and 328 may be performed as part of the processing at block 315 of FIG. 3A. The processing at blocks 322, 326, and 330 may be performed as part of the processing at block 317 of FIG. 3A.

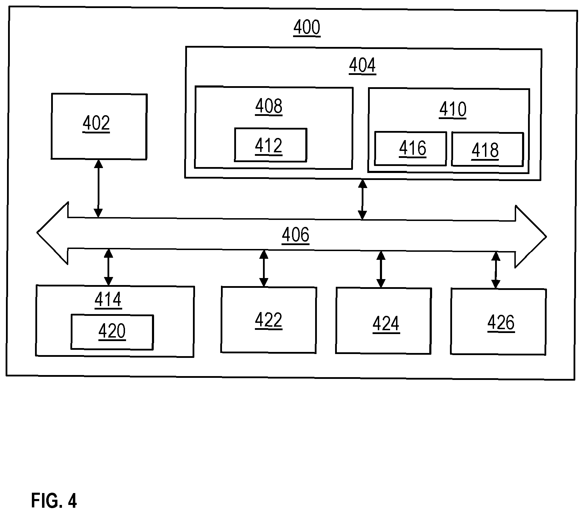

**FIG. 4** **is** a schematic diagram of a computer system **400** for implementing examples disclosed herein. A control system e.g. control system 30 may be implemented as the computer system 400. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display or a video display unit. The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

### Examples

Example 1. A thermal management system for a fuel cell vehicle, the system comprising:
a fuel cell system and a cooling system comprising a main cooling circuit configured to have a coolant circulating therein to regulate a temperature of the fuel cell system, wherein the main cooling circuit comprises a coolant pump configured to pump the coolant through the main cooling circuit, the main cooling circuit comprising a pump downstream portion located downstream of the pump and a pump upstream portion located upstream of the pump, the system comprising:
a first coolant heating circuit coupled to the main cooling circuit and configured to have a portion of the coolant in the pump downstream portion being selectively passed therethrough, the first coolant heating circuit comprising a coolant heater configured to preheat the portion of the coolant before starting up the fuel cell system;
a second coolant heating circuit coupled to the main cooling circuit and configured to have a portion of the coolant in the pump downstream portion being selectively passed therethrough, the second heating circuit comprising a cabin heater configured to regulate a temperature in a cabin of the fuel cell vehicle; and
a third coolant heating circuit coupled to the main cooling circuit and configured to have a portion of the coolant in the pump downstream portion being selectively passed therethrough, the third coolant heating circuit comprising a cryogenic hydrogen storage heater configured to regulate a temperature of a cryogenic hydrogen storage of the fuel cell vehicle.

Example 2. The thermal management system of Example 1, comprising:
a fourth coolant heating circuit coupled to the main cooling circuit and comprising a coolant ion filter, the fourth coolant heating circuit being configured to have a portion of the coolant being passed therethrough and through the coolant ion filter.

Example 3. The thermal management system of Example 1 or Example 2, comprising a directional valve set, comprising at least one valve, which is configured to allow the coolant to be selectively passed at least through the first, second, and third coolant heating circuits.

Example 4. The thermal management system of Example 3, wherein the directional valve set comprises:
a first directional valve positioned so as to direct a flow of the coolant to the first coolant heating circuit and/or to the second and third coolant heating circuits; and
a second directional valve positioned downstream of the first directional valve, the second directional valve being positioned so as to direct a flow of the coolant to the second coolant heating circuit and/or to the third coolant heating circuit.

Example 5. The thermal management system of any one of Examples 2 to 4, wherein the thermal management system comprises a loop comprising the pump upstream portion and the pump downstream portion, the loop encompassing the first, second, third, and fourth coolant heating circuits.

Example 6. The thermal management system of Example 5, wherein the loop comprises:
a common forward line in fluid communication with the main cooling circuit and comprising the pump downstream portion, the common forward line being configured to carry the coolant towards the first, second, third, and fourth coolant heating circuits, and
a common return line in fluid communication with the main cooling circuit and comprising the pump upstream portion, the common return line being configured to carry the coolant that has passed through one or more of the first, second, third, and fourth coolant heating circuits.

Example 7. The thermal management system of any one of Examples 2 to 6, wherein the thermal management system comprises an enclosure encompassing at least the coolant pump and the first, second, third and fourth coolant heating circuits.

Example 8. A fuel cell vehicle comprising a thermal management system of any one of Examples 1 to 7.

Example 9. A method of operating a thermal management system for a fuel cell vehicle, the thermal management system comprising a main cooling circuit configured to have a coolant circulating therein to regulate a temperature of the fuel cell system, the main cooling circuit comprising a coolant pump configured to pump the coolant through the main cooling circuit, and the main cooling circuit comprising a pump downstream portion located downstream of the pump and a pump upstream portion located upstream of the pump, the thermal management system comprising, coupled to main cooling circuit, a first coolant heating circuit comprising a coolant heater configured to preheat a portion of the coolant before starting up the fuel cell system, a second coolant heating circuit comprising a cabin heater configured to regulate a temperature in a cabin of the fuel cell vehicle, and a third coolant heating circuit comprising a cryogenic hydrogen storage heater configured to regulate a temperature of a cryogenic hydrogen storage of the fuel cell vehicle, the method comprising:
once the fuel cell system has started, in response to determining that operation of one or both the cabin heater and the cryogenic hydrogen storage heater is required, controlling the thermal management system so that the portion of the coolant flows through one or both the second coolant heating circuit comprising the cabin heater and the third coolant heating circuit comprising the cryogenic hydrogen storage heater.

Example 10. The method of Example 9, comprising, in response to determining that a cold start of the fuel cell system is expected, controlling the thermal management system so that the portion of the coolant flows through the first coolant heating circuit comprising the heater configured to preheat the portion of the coolant before starting up the fuel cell system.

Example 11. The method of Example 9 or Example 10, wherein the thermal management system comprises a directional valve set, comprising at least one valve, which is configured to allow the coolant to be selectively passed at least through the first, second, and third coolant heating circuits.

Example 12. The method of Example 11, when dependent on Example 10, comprising:
in response to determining that the cold start of the fuel cell system is expected, controlling the thermal management system by operating a directional valve set, the operating the directional valve set preferably comprises operating a first directional valve of the directional valve set, to allow the portion of the coolant to flow through the first coolant heating circuit to preheat the portion of the coolant before starting up the fuel cell system.

Example 13. The method of Example 12, comprising:
once the fuel cell system has started, in response to determining that operation of one or both the cabin heater and the cryogenic hydrogen storage heater is required, controlling the thermal management system by operating the directional valve set, the operating the directional valve set preferably comprises operating a second directional valve of the directional valve set, to direct the portion of the coolant to one or both the second coolant heating circuit and the third coolant heating circuit.

Example 14. The method of any one of Examples 9 to 13, wherein the thermal management system comprises a fourth coolant heating circuit comprising a coolant ion filter, the fourth coolant heating circuit being configured to have a portion of the coolant being passed therethrough and through the coolant ion filter, the method comprising controlling the thermal management system so that the portion of the coolant flows through the fourth coolant heating circuit and through the coolant ion filter.

Example 15. The method of Example 14, comprising initiating the controlling of the thermal management system, so that the portion of the coolant flows through the fourth coolant heating circuit and through the coolant ion filter before the fuel cell system has started.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A thermal management system (12) for a fuel cell vehicle (10), the system comprising:
a fuel cell system (14) and a cooling system (16) comprising a main cooling circuit (15) configured to have a coolant circulating therein to regulate a temperature of the fuel cell system, wherein the main cooling circuit comprises a coolant pump (17) configured to pump the coolant through the main cooling circuit, the main cooling circuit comprising a pump downstream portion located downstream of the pump and a pump upstream portion located upstream of the pump, the system comprising:
a first coolant heating circuit (32) coupled to the main cooling circuit and configured to have a portion of the coolant in the pump downstream portion being selectively passed therethrough, the first coolant heating circuit comprising a coolant heater (42) configured to preheat the portion of the coolant before starting up the fuel cell system;
a second coolant heating circuit (34) coupled to the main cooling circuit and configured to have a portion of the coolant in the pump downstream portion being selectively passed therethrough, the second heating circuit comprising a cabin heater (44) configured to regulate a temperature in a cabin of the fuel cell vehicle; and
a third coolant heating circuit (36) coupled to the main cooling circuit and configured to have a portion of the coolant in the pump downstream portion being selectively passed therethrough, the third coolant heating circuit comprising a cryogenic hydrogen storage heater (46) configured to regulate a temperature of a cryogenic hydrogen storage of the fuel cell vehicle.

2. The thermal management system of claim 1, comprising:
a fourth coolant heating circuit (38) coupled to the main cooling circuit and comprising a coolant ion filter (58), the fourth coolant heating circuit being configured to have a portion of the coolant being passed therethrough and through the coolant ion filter.

3. The thermal management system of claim 1 or claim 2, comprising a directional valve set (52) comprising at least one valve that is configured to allow the coolant to be selectively passed at least through the first, second, and third coolant heating circuits.

4. The thermal management system of claim 3, wherein the directional valve set (52) comprises:
a first directional valve (54) positioned so as to direct a flow of the coolant to the first coolant heating circuit and/or to the second and third coolant heating circuits; and
a second directional valve (56) positioned downstream of the first directional valve, the second directional valve being positioned so as to direct a flow of the coolant to the second coolant heating circuit and/or to the third coolant heating circuit.

5. The thermal management system of any one of claims 2 to 4, wherein the thermal management system comprises a loop (13) comprising the pump upstream portion and the pump downstream portion, the loop encompassing the first, second, third, and fourth coolant heating circuits.

6. The thermal management system of claim 5, wherein the loop comprises:
a common forward line in fluid communication with the main cooling circuit and comprising the pump downstream portion, the common forward line being configured to carry the coolant towards the first, second, third, and fourth coolant heating circuits, and
a common return line in fluid communication with the main cooling circuit and comprising the pump upstream portion, the common return line being configured to carry the coolant that has passed through one or more of the first, second, third, and fourth coolant heating circuits.

7. The thermal management system of any one of claims 2 to 6, wherein the thermal management system comprises an enclosure encompassing at least the coolant pump and the first, second, third and fourth coolant heating circuits.

8. A fuel cell vehicle (10) comprising a thermal management system (12) of any one of claims 1 to 7.

9. A method (300) of operating a thermal management system for a fuel cell vehicle, the thermal management system comprising a main cooling circuit configured to have a coolant circulating therein to regulate a temperature of the fuel cell system, the main cooling circuit comprising a coolant pump configured to pump the coolant through the main cooling circuit, and the main cooling circuit comprising a pump downstream portion located downstream of the pump and a pump upstream portion located upstream of the pump, the thermal management system comprising, coupled to main cooling circuit, a first coolant heating circuit comprising a coolant heater configured to preheat a portion of the coolant before starting up the fuel cell system, a second coolant heating circuit comprising a cabin heater configured to regulate a temperature in a cabin of the fuel cell vehicle, and a third coolant heating circuit comprising a cryogenic hydrogen storage heater configured to regulate a temperature of a cryogenic hydrogen storage of the fuel cell vehicle, the method comprising:
once the fuel cell system has started, in response to determining that operation of one or both the cabin heater and the cryogenic hydrogen storage heater is required, controlling (317) the thermal management system so that the portion of the coolant flows through one or both the second coolant heating circuit comprising the cabin heater and the third coolant heating circuit comprising the cryogenic hydrogen storage heater.

10. The method of claim 9, comprising, in response to determining that a cold start of the fuel cell system is expected, controlling (305) the thermal management system so that the portion of the coolant flows through the first coolant heating circuit comprising the heater configured to preheat the portion of the coolant before starting up the fuel cell system.

11. The method of claim 9 or claim 10, wherein the thermal management system comprises a directional valve set (52), comprising at least one valve, which is configured to allow the coolant to be selectively passed at least through the first, second, and third coolant heating circuits.

12. The method of claim 11, when dependent on claim 10, comprising:
in response to determining that the cold start of the fuel cell system is expected, controlling the thermal management system by operating the directional valve set (52), the operating the directional valve set (52) preferably comprises operating a first directional valve (54) of the directional valve set (52), to allow the portion of the coolant to flow through the first coolant heating circuit to preheat the portion of the coolant before starting up the fuel cell system.

13. The method of claim 12, comprising:
once the fuel cell system has started, in response to determining that operation of one or both the cabin heater and the cryogenic hydrogen storage heater is required, controlling the thermal management system by operating the directional valve set, the operating the directional valve set (52) preferably comprises operating a second directional valve (56) of the directional valve set (52), to direct the portion of the coolant to one or both the second coolant heating circuit and the third coolant heating circuit.

14. The method of any one of claims 9 to 13, wherein the thermal management system comprises a fourth coolant heating circuit comprising a coolant ion filter, the fourth coolant heating circuit being configured to have a portion of the coolant being passed therethrough and through the coolant ion filter, the method comprising controlling (312) the thermal management system so that the portion of the coolant flows through the fourth coolant heating circuit and through the coolant ion filter.

15. The method of claim 14, comprising initiating the controlling of the thermal management system, so that the portion of the coolant flows through the fourth coolant heating circuit and through the coolant ion filter before the fuel cell system has started.
